(19) Europäisches Patentamt / European Patent Office / Office européen des brevets

(11) **EP 4 131 690 A1**

(12) **EUROPEAN PATENT APPLICATION**
published in accordance with Art. 153(4) EPC

(43) Date of publication:
**08.02.2023 Bulletin 2023/06**

(51) International Patent Classification (IPC):
**H02G 7/02** (1968.09)  **B60M 1/26** (1968.09)

(21) Application number: **21781597.6**

(52) Cooperative Patent Classification (CPC):
**B60M 1/26; H02G 7/02**

(22) Date of filing: **10.03.2021**

(86) International application number:
**PCT/JP2021/009666**

(87) International publication number:
**WO 2021/199999 (07.10.2021 Gazette 2021/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.03.2020 JP 2020063175**

(71) Applicant: **NHK Spring Co., Ltd.
Yokohama-shi, Kanagawa 236-0004 (JP)**

(72) Inventors:
• **KOMIYA, Minoru
Yokohama-shi, Kanagawa 236-0004 (JP)**

• **TANEDA, Hiroyuki
Yokohama-shi, Kanagawa 236-0004 (JP)**
• **TAMI, Kenichiro
Yokohama-shi, Kanagawa 236-0004 (JP)**
• **SUGIURA, Hironobu
Yokohama-shi, Kanagawa 236-0004 (JP)**
• **NASUBIDA, Shinya
Yokohama-shi, Kanagawa 236-0004 (JP)**

(74) Representative: **Hoffmann Eitle
Patent- und Rechtsanwälte PartmbB
Arabellastraße 30
81925 München (DE)**

(54) **BALANCER AND BALANCER SYSTEM**

(57) A balancer according to the present invention includes: an actuator configured to adjust a tension of a wire member; a tension sensor disposed between the wire member and the actuator and configured to detect the tension of the wire member; and a drive control unit configured to control the actuator, based on the tension of the wire member detected by the tension sensor.

FIG.1

EP 4 131 690 A1

**Description**

Field

The present invention relates to a balancer and a balancer system.

Background

Conventionally, a current collector (a pantograph) on a roof of a train comes into contact with an overhead trolley wire, whereby electric energy is supplied to the train via the trolley wire. For the stable supply of electric power to the train, the tension of the overhead wire needs to be constant. For that purpose, a balancer is used to adjust the tension varying with temperature and wear to be constant (for example, see Patent Literature 1). The balancer disclosed in Patent Literature 1 includes a plurality of coil springs expanding and contracting in the direction of tension adjustment, and thereby adjusts the tension of the overhead wire.

Citation List

Patent Literature

Patent Literature 1: Japanese Patent No. 3666971

Summary

Technical Problem

With faster train speeds, more sophisticated performance is required of a balancer. Specifically, the rate of change in the tension of an overhead wire needs to be reduced so as to accommodate faster train speeds. However, as the rate of change in tension is reduced, it follows that the balancer disclosed in Patent Literature 1 includes a longer coil spring or more coil springs, and as a result, the balancer itself is larger in size.

In view of these circumstances, an object of the present invention is to provide a balancer and a balancer system that are capable of reducing the rate of change in tension while substantially preventing an increase in size.

Solution to Problem

To solve the above-described problem and achieve the object, a balancer according to the present invention includes: an actuator configured to adjust a tension of a wire member; a tension sensor disposed between the wire member and the actuator and configured to detect the tension of the wire member; and a drive control unit configured to control the actuator, based on the tension of the wire member detected by the tension sensor.

Moreover, in the above-described balancer according to the present invention, the actuator includes: a hydraulic cylinder, a hydraulic pump configured to supply a hydraulic oil to the hydraulic cylinder, and a piston rod disposed to be freely movable forward and backward with respect to the hydraulic cylinder and configured to move by the hydraulic oil supplied to the hydraulic cylinder.

Moreover, in the above-described balancer according to the present invention, the drive control unit is configured to detect expansion of the wire member, based on a position of the piston rod after the wire member is adjusted to have a set tension.

Moreover, in the above-described balancer according to the present invention, the drive control unit is configured to detect wear of the wire member, based on a transmission time of a signal transmitted via the wire member to another balancer paired with the balancer.

Moreover, in the above-described balancer according to the present invention, the drive control unit is configured to acquire information on a tension of another balancer paired with the balancer, and calculate a driving amount of the actuator of the balancer including the drive control unit and an actuator of the other balancer.

Moreover, the above-described balancer according to the present invention further includes a rust-preventing mechanism configured to prevent the piston rod from rusting.

Moreover, in the above-described balancer according to the present invention, the rust-preventing mechanism is configured to hermetically seal the piston rod in an inert gas atmosphere.

Moreover, in the above-described balancer according to the present invention, the rust-preventing mechanism is configured to apply a rust preventive oil to the piston rod.

Moreover, in the above-described balancer according to the present invention, the wire member includes a trolley wire configured to come into contact with a pantograph of a train, and the drive control unit is configured to cause the tension sensor to detect the tension of the wire member at a predetermined time before a time when the train passes through the trolley wire targeted for control, and control the actuator, based on the detected tension.

Moreover, a balancer system according to the present invention includes: a first balancer connected to one end of a wire member and configured to adjust a tension of the wire member, and a second balancer connected to another end of the same wire member shared with the first balancer, and configured to adjust the tension of the wire member, wherein the first balancer includes: a first actuator configured to adjust the tension of the wire member; a first tension sensor disposed between the wire member and the first actuator and configured to detect the tension of the wire member; a first drive control unit configured to control the first actuator, based on the tension of the wire member detected by the first tension sensor; and a first communication unit to communicate with the second balancer, and the first balancer includes: a second actuator configured to adjust the tension of the wire member; a second tension sensor disposed between the wire member and the second actuator and configured to detect the tension of the wire member; a second drive control unit configured to control the second actuator, based on the tension of the wire member detected by the second tension sensor; and a second communication unit configured to communicate with the first balancer.

Moreover, in the balancer system according to the present invention, the first drive control unit is configured to detect wear of the wire member, based on a transmission time of a signal transmitted to the second balancer via the wire member.

Moreover, in the balancer system according to the present invention, the first drive control unit is configured to acquire information on a tension of the second balancer, and calculate a driving amount of the actuators of the first balancer and the second balancer.

Moreover, in the balancer system according to the present invention, the first actuator includes: a first hydraulic cylinder; a first hydraulic pump configured to supply a first hydraulic oil to the first hydraulic cylinder; and a first piston rod disposed to be freely movable forward and backward with respect to the first hydraulic cylinder, and configured to move by the first hydraulic oil supplied to the first hydraulic cylinder, and the second actuator includes: a second hydraulic cylinder; a second hydraulic pump configured to supply a second hydraulic oil to the second hydraulic cylinder; and a second piston rod disposed to be freely movable forward and backward with respect to the second hydraulic cylinder, and configured to move by the second hydraulic oil supplied to the second hydraulic cylinder.

Moreover, in the balancer system according to the present invention, the first drive control unit is configured to change a set tension, based on information on control of the first actuator and a result detected by the first tension sensor, and the second drive control unit is configured to change a set tension, based on information on control of the second actuator and a result detected by the second tension sensor.

Advantageous Effects of Invention

According to the present invention, it is possible to reduce the rate of change in tension while substantially preventing an increase in size.

Brief Description of Drawings

FIG. 1 is a diagram illustrating an exemplary usage aspect of a balancer according to a first embodiment of the present invention.
FIG. 2 is a partial cross-sectional view of the configuration of the balancer according to the first embodiment of the present invention.
FIG. 3 is a block diagram illustrating the configuration of a drive control unit of the balancer according to the first embodiment of the present invention.
FIG. 4 is a block diagram illustrating the configuration of a drive control unit of a balancer according to a first modification of the first embodiment of the present invention.
FIG. 5 is a partial cross-sectional view of the configuration of a balancer according to a second modification of the first embodiment of the present invention.
FIG. 6 is a (first) partial cross-sectional view of the configuration of a balancer according to a third modification of the first embodiment of the present invention.
FIG. 7 is a (second) partial cross-sectional view of the configuration of the balancer according to the third modification of the first embodiment of the present invention.
FIG. 8 is a (first) partial cross-sectional view of the configuration of a balancer according to a fourth modification of the first embodiment of the present invention.
FIG. 9 is a (second) partial cross-sectional view of the configuration of the balancer according to the fourth modification of the first embodiment of the present invention.
FIG. 10 is an exemplary usage aspect of a balancer according to a second embodiment of the present invention.

FIG. 11 is a block diagram illustrating the configuration of a drive control unit of a balancer according to a first modification of the second embodiment of the present invention.

FIG. 12 is a block diagram illustrating the configuration of a drive control unit of a balancer according to a second modification of the second embodiment of the present invention.

Description of Embodiments

Hereinafter, embodiments of the present invention will be described in detail with reference to the drawings. The present invention shall not be limited by the following embodiments. The drawings referred to in the following descriptions merely schematically illustrate shapes, sizes, and positional relations just enough to understand the contents of the present invention. In other words, the present invention is not limited only by the shapes, sizes, and positional relations illustrated in the drawings.

(First Embodiment)

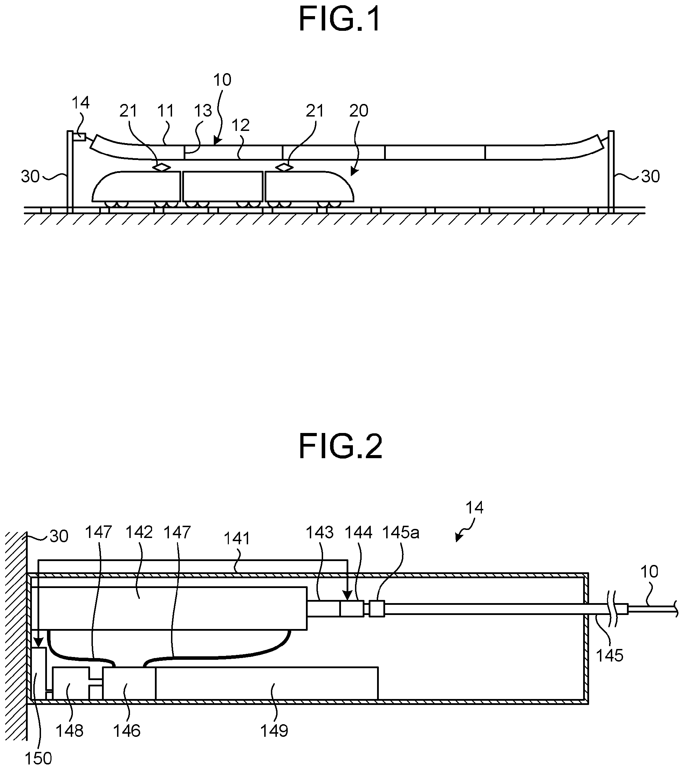

FIG. 1 is a diagram illustrating an exemplary usage aspect of a balancer according to a first embodiment of the present invention. A current collector (a pantograph) 21 on a roof of a train 20 comes into contact with an overhead wire 10, whereby electric energy is supplied to the train 20 via the overhead wire 10. The overhead wire 10 includes: a catenary wire 11; a trolley wire 12 configured to come into contact with the pantograph 21 to supply electric power to the train 20; and a hanger 13. The trolley wire 12 is supported by the hanger 13 attached to the catenary wire 11. One end of the overhead wire 10 is fixed to a support pole 30 while the other end of the overhead wire 10 is connected to a balancer 14. The balancer 14 is fixed to the support pole 30. In the overhead wire 10, the tension of the catenary wire 11 and the tension of the trolley wire 12 are adjusted by the balancer 14. For the stable supply of electric power to the train 20, it is important to keep the tension of the trolley wire 12 stable. Therefore, the stable control of the tension of the overhead wire 10 is required of the balancer 14.

FIG. 2 is a partial cross-sectional view of the configuration of the balancer according to the first embodiment of the present invention. The balancer 14 includes a casing 141, a hydraulic cylinder 142, a piston rod 143, a tension sensor 144, a rod 145, a hydraulic pump 146, a hydraulic hose 147, a motor 148, a hydraulic oil tank 149, and a drive control unit 150. In the first embodiment, the hydraulic cylinder 142, the piston rod 143, the hydraulic pump 146, the hydraulic hose 147, and the motor 148 constitute an actuator.

The casing 141 is configured to accommodate the hydraulic cylinder 142, the piston rod 143, the tension sensor 144, the rod 145, the hydraulic pump 146, the hydraulic hose 147, the motor 148, the hydraulic oil tank 149, and the drive control unit 150. The casing 141 accommodates the rod 145 so that a part of the rod 145 extends outside the casing 141 and the rod 145 is freely movable forward and backward in the longitudinal direction of the rod 145.

The hydraulic cylinder 142 is configured to move the piston rod 143 by a hydraulic oil supplied from the hydraulic pump 146 via the hydraulic hose 147. In the hydraulic cylinder 142, a positive or negative pressure is formed according to the amount of the hydraulic oil supplied, and the piston rod 143 moves according to the pressure.

The tension sensor 144 is interposed between the piston rod 143 and the rod 145 and configured to detect a tensile force of the rod 145. The tensile force corresponds to the tension of the overhead wire 10. Thus, the tension sensor 144 detects the tension of the overhead wire 10 via the rod 145. The tension sensor 144 outputs a detected value to the drive control unit 150.

One end of the rod 145 is connected to the tension sensor 144 and the other end of the rod 145 is connected to the overhead wire 10. The rod 145 includes a stopper 145a configured to adjust the amount of extension from the casing 141. The stopper 145a is disposed inside the casing 141. When viewed along the movement direction (the longitudinal direction) of the rod 145, the stopper 145a has a size larger than the opening size of a hole (not illustrated) formed in the casing 141 and allowing the rod 145 to pass therethrough.

The hydraulic pump 146 is configured to send a hydraulic oil contained in the hydraulic oil tank 149 to the hydraulic hose 147 or suck the hydraulic oil contained in the hydraulic cylinder 142 via the hydraulic hose 147, by the driving of the motor 148.

The motor 148 is configured with a stepping motor, for example, and is driven (rotated) in accordance with a pulse signal from a control unit 154, and thus the rate of rotation of the motor 148 is controlled. The control unit 154 is capable of grasping a position of the piston rod 143 in the hydraulic cylinder 142 by controlling the rate of rotation of the motor 148.

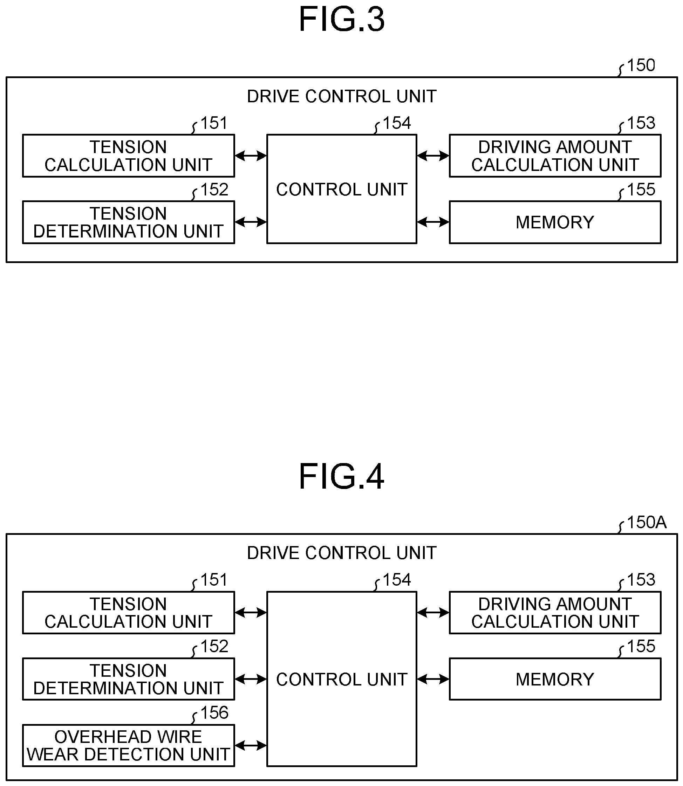

Next, the configuration of the drive control unit 150 will be described with reference to FIG. 3. FIG. 3 is a block diagram illustrating the configuration of the drive control unit of the balancer according to the first embodiment of the present invention. The drive control unit 150 includes a tension calculation unit 151, a tension determination unit 152, a driving amount calculation unit 153, the control unit 154, and a memory 155. The drive control unit 150 is embodied by fabricating a circuit on a substrate.

The tension calculation unit 151 is communicably connected to the tension sensor 144. The tension calculation unit 151 is configured to calculate a tension applied to the rod 145, based on a detected value acquired from the tension sensor 144. The tension calculation unit 151 outputs the calculated tension to the control unit 154.

The tension determination unit 152 is configured to determine whether the tension calculated by the tension calculation unit 151 is appropriate with respect to a tension set for the overhead wire 10. The tension determination unit 152 determines whether the tension calculated by the tension calculation unit 151 satisfies a threshold value. Note that an upper limit and a lower limit of the threshold value are set, and the range between the upper limit and the lower limit is an allowable range within which a tension is determined to be appropriate. The tension determination unit 152 may be configured to calculate the difference between a predetermined tension (a reference tension) and a tension calculated by the tension calculation unit 151 and compare this difference with the threshold value to determine whether the tension is appropriate.

The driving amount calculation unit 153 is configured to calculate a driving amount needed for moving the rod 145 when the tension does not satisfy the threshold value. The driving amount calculation unit 153 calculates the direction and amount of movement of the rod 145, based on the tension calculated by the tension calculation unit 151, and calculates the driving amount of the motor according to the calculated direction and amount of the movement. The driving amount is, for example, an output value.

When the calculated tension is below the allowable range, the driving amount calculation unit 153 increases the tension of the overhead wire 10 by drawing the piston rod 143 into the hydraulic cylinder 142. In contrast, when the calculated tension is above the allowable range, the driving amount calculation unit 153 reduces the tension of the overhead wire 10 by displacing the piston rod 143 from the hydraulic cylinder 142. For example, the driving amount calculation unit 153 outputs the amount of movement in a predetermined direction in the form of a plus (+) value and outputs the amount of movement in a direction opposite to the predetermined direction in the form of a minus (-) value.

The control unit 154 is configured to control operations of the constituents of the balancer 14. For example, the control unit 154 causes the adjustment of the tension of the overhead wire 10 when acquiring a detection value from the tension sensor 144. The control unit 154 drives the motor 148 in accordance with a driving amount calculated by the driving amount calculation unit 153.

Here, in the case of a hydraulic system, the amount of protrusion of the piston rod 143 from the hydraulic cylinder 142 changes over time even when the position of the piston rod 143 is maintained by using the hydraulic pump 146. Therefore, the control unit 154 needs to control the motor 148 at predetermined intervals and thereby maintain the amount of protrusion of the piston rod 143. In this case, tension adjustment may not be performed during a period when the train 20 does not pass, but may be performed at a predetermined time before the time when the train 20 passes. "The time when the train 20 passes" mentioned here means the time when the train 20 enters a section of the trolley wire the tension of which is adjusted with the control of the tension of the overhead wire 10.

To enhance current collecting performance during the running of the train at high speeds, it is necessary to increase "a wave propagation speed" that is a speed at which waves propagate in the trolley wire and the like. Let the wave propagation speed (m/s) be c, let the tension of the trolley wire be T, and let the unit length mass of the trolley wire (kg/m) be $\rho$, then the wave propagation speed c is expressed by the following equation (1).

$$c = \sqrt{(T/\rho)} \tag{1}$$

The equation (1) indicates that, to increase the wave propagation speed, for example, the tension of the trolley wire needs to be increased. For example, control such as making the tension higher than usual may be exerted, for example, by acquiring information beforehand on the approach of a train and the like. Although train speeds are getting faster year by year, it is possible to cope with such faster train speeds by temporarily increasing the tension when a train approaches, as described above.

In conventional spring balancers, it is necessary to, for example, increase the size of a spring in order to cope with higher tension, but, in a balancer to which a method according to the present embodiment is applied, tension can be enhanced utilizing the amount of control of the actuator or the like, and hence, tension can be enhanced without changing the balancer.

In a period just before and a period just after the train 20 passes, tension control may be performed in increments of a few seconds. When the train 20 passes, the trolley wire 12 swings due to contact between the trolley wire 12 and the pantograph 21, and the effect of this swinging causes a change in the tension of the trolley wire 12. By performing the control of the tension of the overhead wire 10 in increments of a few seconds, appropriate tension can be maintained even when a change in tension is caused by the swinging of the trolley wire 12 at the time of the passage of the train 20.

The memory 155 is configured to store, for example, programs for the control unit 154 to perform various operations (for example, a program to drive the hydraulic pump), and threshold values (allowable range) for tension determination. The memory 155 is configured with a volatile or nonvolatile memory or a combination thereof. For example, the memory 155 is configured with a random access memory (RAM), a read only memory (ROM), or the like.

The tension calculation unit 151, the tension determination unit 152, the driving amount calculation unit 153, and the control unit 154 are each configured with a processor such as a central processing unit (CPU) or a processor such as various types of arithmetic circuits to perform a specific function such as an application specific integrated circuit (ASIC).

In the above-described first embodiment, the piston rod 143 is controlled using the hydraulic pump 146, whereby the tension of the overhead wire 10 connected to the piston rod 143 is adjusted. According to the first embodiment, by using a hydraulic tension adjustment mechanism such as the hydraulic pump 146, the rate of change in tension can be reduced without increasing the number of members (for example, coil springs), and thus the rate of change in tension can be reduced while an increase in the size of the balancer can be substantially prevented.

When materials of the catenary wire 11 and the trolley wire 12 are changed, the elasticity of the catenary wire 11 and the trolley wire 12 with temperature may change. In this case, the materials after the change sometimes have a larger amount of expansion and contraction owing to temperature than the materials before the change, but the balancer according to the first embodiment is capable of adjusting the tension of the overhead wire 10 against this change while substantially preventing the balancer from increasing in size and weight.

Note that, in the first embodiment, an example in which the tension of the overhead wire 10 is adjusted using the hydraulic actuator was described, but, the tension of the overhead wire 10 may be adjusted using an actuator different from the hydraulic actuator, such as an actuator using a chain or an actuator using a ball screw.

(First Modification of First Embodiment)

Next, a first modification of the above-described first embodiment will be described with reference to FIG. 4. FIG. 4 is a block diagram illustrating the configuration of a drive control unit in a balancer according to the first modification of the first embodiment of the present invention. In the first modification, the above-described balancer 14 includes a drive control unit 150A instead of the drive control unit 150. Hereinafter, the drive control unit 150A will be described. Note that the same constituents as those in the first embodiment described above are given the same reference numerals.

The drive control unit 150A includes the tension calculation unit 151, the tension determination unit 152, the driving amount calculation unit 153, the control unit 154, the memory 155, and an overhead wire wear detection unit 156.

The overhead wire wear detection unit 156 is configured to detect the wear of the overhead wire 10 by detecting the expansion of the overhead wire 10 based on a relative position of the piston rod 143 to the hydraulic cylinder 142 and a tension detected at that point of time. For example, when the cross-sectional area of the trolley wire 12 changes due to wear or other factors, the tension of the trolley wire 12 generated by pulling by the rod 145 changes accordingly. Hence, when the worn trolley wire 12 and the unworn trolley wire 12 have the same tension, the position of the piston rod 143 in the hydraulic cylinder 142 changes for each trolley wire. For example, an expansion amount Y of the trolley wire 12 can be expressed by the following equation (2), where the length of the trolley wire 12 is L, the amount of change in tension is x, the longitudinal elastic modulus of the trolley wire 12 is E, and the cross-sectional area of the trolley wire 12 is S.

$$Y = L \times x/(E \times S) \qquad\qquad (2)$$

When the tension of the unworn trolley wire 12 having a cross-sectional area of 120 mm$^2$, an overhead wire length of 800 m, and a longitudinal elastic modulus of 10500 kgf/mm$^2$ is changed by 275 kgf, the amount of expansion of the unworn trolley wire 12 is calculated using the equation (2) and determined to be 173 mm. In contrast, when the cross-sectional area of the trolley wire 12 is reduced to 3/4 (90 mm$^2$), the amount of expansion of the trolley wire 12 is 232 m. In this case, even when the unworn trolley wire 12 and the worn trolley wire 12 are adjusted to have the same tension, there is a difference of approximately 60 mm in expansion between the unworn trolley wire 12 and the worn trolley wire 12. This difference can be detected as a change in the position of the piston rod 143 in the hydraulic cylinder 142.

The overhead wire wear detection unit 156 is configured to detect the expansion of the overhead wire 10 from a change in the position of the piston rod 143. Here, the expansion of the whole of the overhead wire 10 due to the wear of the trolley wire 12 or the like is detected. The position of the piston rod 143 in the hydraulic cylinder 142 can be determined, based on the rate of rotation of the motor 148. The overhead wire wear detection unit 156 detects the expansion of the overhead wire 10, based on the difference between the position of the piston rod 143 in the hydraulic cylinder 142 when the tension is adjusted to a reference tension and a reference position. The reference position is, for example, a position of the piston rod 143 in the hydraulic cylinder 142 when the tension of the unworn overhead wire 10 that is stored in advance in the memory 155 is defined as a set tension, or a position of the piston rod 143 in the hydraulic cylinder 142 when the tension of the unworn overhead wire 10 immediately after the installation of the overhead wire 10 is defined as a set tension. The set tension mentioned here is, for example, a set tension adjusted for the overhead wire 10.

For example, when a calculated difference is greater than a predetermined threshold value, the overhead wire wear detection unit 156 determines that the overhead wire 10 has expanded and is worn. The threshold is set, for example, based on the relation between the strength of the overhead wire 10 having a cross-sectional area that decreases with wear and a strength required of the overhead wire 10. The overhead wire wear detection unit 156 outputs the determination result to the control unit 154.

Upon acquiring the determination result from the overhead wire wear detection unit 156, the control unit 154 stores the determination result in the memory 155 or transmits the determination result to a center configured to centrally control a plurality of the balancers 14. When transmitting the determination result to the center, the control unit 154 transmits information (for example, ID) for identifying the control unit 154 itself (the balancer 14) or the overhead wire 10 targeted for tension adjustment, together with the determination result.

In the above-described first modification, in the same manner as in the first embodiment, the piston rod 143 is controlled using the hydraulic pump 146, whereby the tension of the overhead wire 10 connected to the piston rod 143 is adjusted. According to the first modification, by using a hydraulic tension-adjustment mechanism such as the hydraulic pump 146, the rate of change in tension can be reduced without increasing the number of members (for example, coil springs), and thus the rate of change in tension can be reduced while an increase in the size of the balancer can be substantially prevented.

Furthermore, according to the first modification, the overhead wire wear detection unit 156 detects the wear of the overhead wire 10, based on the position of the piston rod 143, whereby a person in charge of management can know the timing for the replacement of the overhead wire 10, for example. Thus, the overhead wire 10 can be replaced with an appropriate timing.

(Second Modification of First Embodiment)

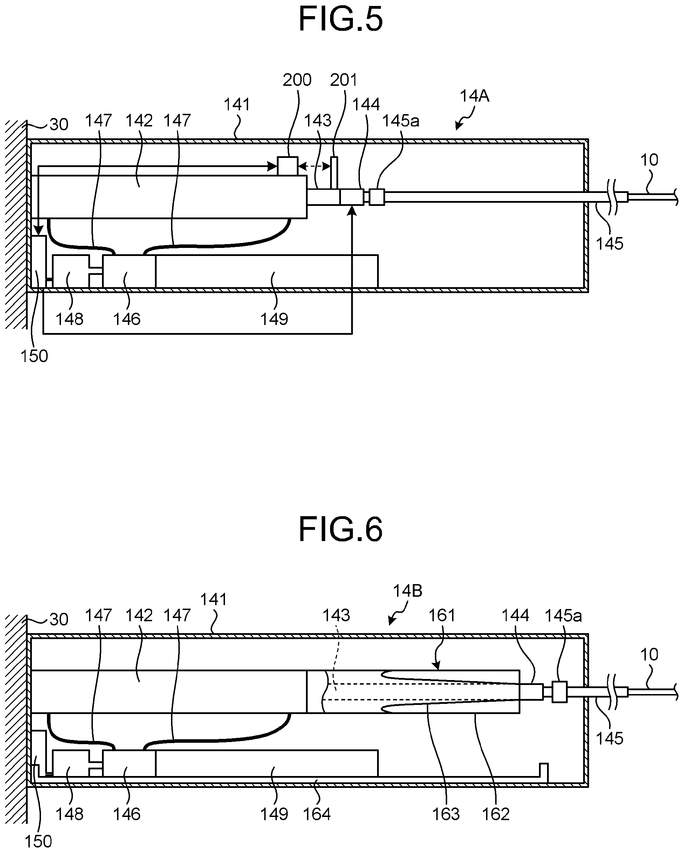

Next, a second modification of the above-described first embodiment will be described with reference to FIG. 5. FIG. 5 is a partial cross-sectional view of the configuration of a balancer according to the second modification of the first embodiment of the present invention. Besides the constituents of the balancer 14 described above, a balancer 14A according to the second modification further includes a laser distance sensor 200 and a reflecting plate 201. Hereinafter, the configurations of the laser distance sensor 200 and the reflecting plate 201 will be described. Note that the same constituents as those in the first embodiment described above are given the same reference numerals.

The laser distance sensor 200 is disposed in the outer surface of the hydraulic cylinder 142.

The reflecting plate 201 is disposed to stand on the piston rod 143 so that the reflecting plate 201 can reflect laser light emitted by the laser distance sensor 200.

The laser distance sensor 200 is configured to emit laser light toward the reflecting plate 201 and receive laser light reflected by the reflecting plate 201. The laser distance sensor 200 outputs, to the control unit 154, for example, information on the amount of time elapsed from the emission of laser light by the laser distance sensor 200 to the time the laser distance sensor 200 receives the laser light reflected by the reflecting plate 201, or information on a phase difference between the emitted light and the returned light.

The control unit 154 is configured to determine the distance between the laser distance sensor 200 and the reflecting plate 201, based on information acquired from the laser distance sensor 200. The control unit 154 determines the position of the piston rod 143 in the hydraulic cylinder 142, based on the determined distance, the position of the laser distance sensor 200 in the hydraulic cylinder 142, and the position of the reflecting plate 201 in the piston rod 143.

Other processes related to tension control are the same as those in the first embodiment.

In the above-described second modification, in the same manner as in the first embodiment, the piston rod 143 is controlled using the hydraulic pump 146, whereby the tension of the overhead wire 10 connected to the piston rod 143 is adjusted. According to the second modification, by using a hydraulic tension-adjustment mechanism such as the hydraulic pump 146, the rate of change in tension can be reduced without increasing the number of members (for example, coil springs), and thus the rate of change in tension can be reduced while an increase in the size of the balancer can be substantially prevented.

In the second modification, the position of the piston rod 143 is detected, based on laser light reflected by the reflecting plate 201, hence, the detection result actually depends on the position of the reflecting plate 201 corresponding to the moved position of the piston rod 143. Therefore, according to the position detection using the laser distance sensor 200 and the reflecting plate 201, the more accurate position of the piston rod 143 can be detected.

Note that a method for detecting the position of the piston rod 143 in the hydraulic cylinder 142 is not limited to the above-described distance measurement using the motor control and laser light, and any well-known method can be used.

(Third Modification of First Embodiment)

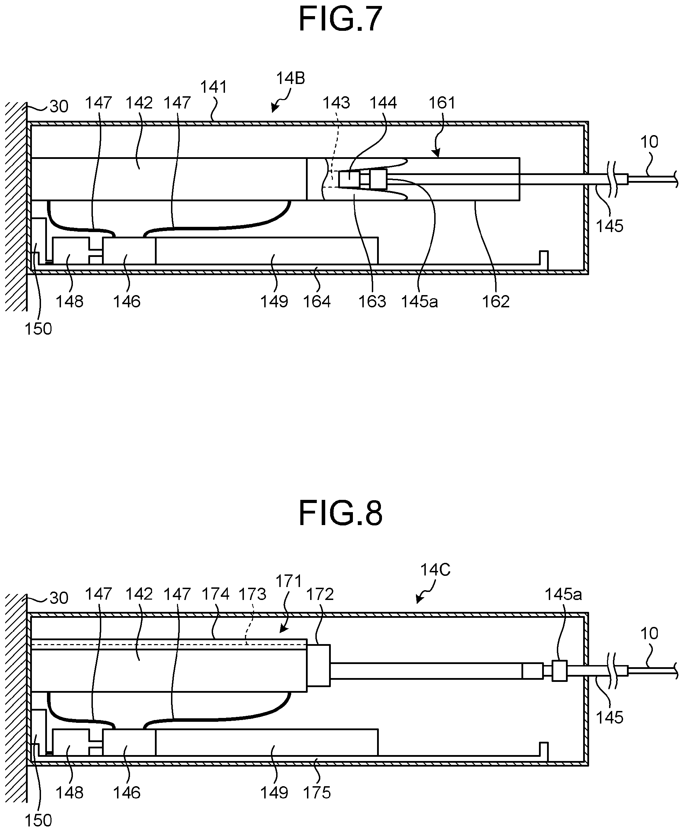

Next, a third modification of the above-described first embodiment will be described with reference to FIG. 6 and FIG. 7. FIG. 6 and FIG. 7 are partial cross-sectional views of the configuration of a balancer according to the third modification of the first embodiment of the present invention. Besides the constituents of the balancer 14 described above, a balancer 14B according to the third modification further includes a rust-preventing mechanism 161. Hereinafter, the rust-preventing mechanism 161 will be described. Note that the same constituents as those in the first embodiment described above are given the same reference numerals.

The rust-preventing mechanism 161 includes a hermetic case 162, an expansion member 163, and an oil pan 164.

The hermetic case 162 is tubular in shape and has one end connected to the hydraulic cylinder 142, and allows the piston rod 143 to be inserted therethrough.

The expansion member 163 is disposed inside the hermetic case 162. One end of the expansion member 163 is fixed to an inner wall of the hermetic case 162 and the other end of the expansion member 163 adheres to the tension sensor 144. Together with the inner wall of the hermetic case 162, the expansion member 163 forms a sealed space for sealing one end, on the tension sensor 144 side, of the piston rod 143. This sealed space is filled with an inert gas. Examples of inert gas include nitrogen and rare-gas elements.

The oil pan 164 is configured to hold hydraulic oil leaking from the hydraulic cylinder 142 or the like.

The expansion member 163 is configured to expand and contract in synchronization with the movement of the piston rod 143. For example, when the piston rod 143 is drawn into the hydraulic cylinder 142 (see FIG. 7) from the state where the tension sensor 144 is positioned outside the hermetic case 162 (see FIG. 6), the expansion member 163 contracts in synchronization with the movement of the piston rod 143. During this process, the hermetically sealed state between the expansion member 163 and the hermetic case 162 is maintained, and accordingly the piston rod 143 remains hermetically sealed in an inert gas atmosphere.

In the above-described third modification, in the same manner as in the first embodiment, the piston rod 143 is controlled using the hydraulic pump 146, whereby the tension of the overhead wire 10 connected to the piston rod 143 is adjusted. According to the third modification, by using a hydraulic tension-adjustment mechanism such as the hydraulic pump 146, the rate of change in tension can be reduced without increasing the number of members (for example, coil springs), and thus the rate of change in tension can be reduced while an increase in the size of the balancer can be substantially prevented.

Furthermore, according to the third modification, using the rust-preventing mechanism 161, the piston rod 143 is kept hermetically sealed in an inert gas atmosphere regardless of the movement of the piston rod 143, so that the formation of rust in the piston rod 143 can be substantially prevented.

(Fourth Modification of First Embodiment)

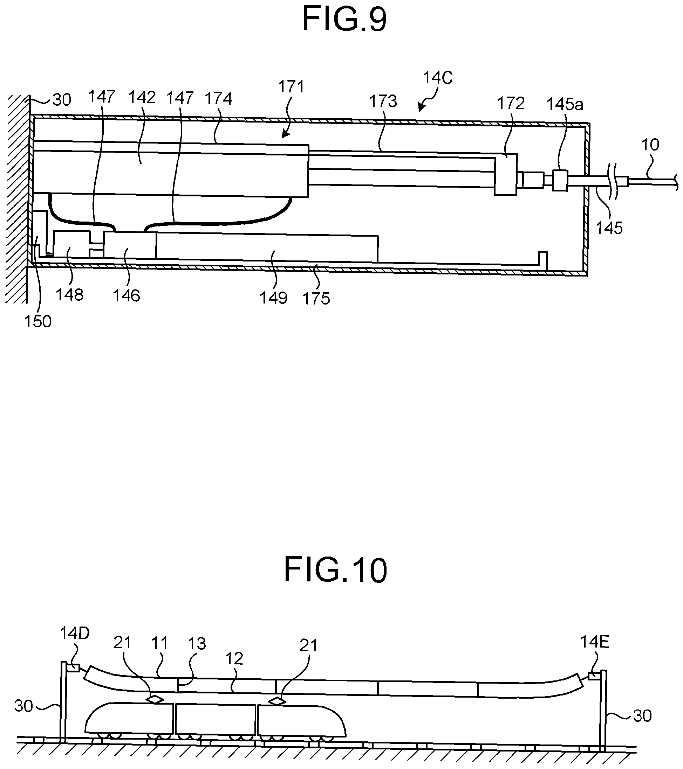

Next, a fourth modification of the above-described first embodiment will be described with reference to FIG. 8 and FIG. 9. FIG. 8 and FIG. 9 are partial cross-sectional views of the configuration of a balancer according to the fourth modification of the first embodiment of the present invention. Besides the constituents of the balancer 14 described above, a balancer 14C according to the fourth embodiment further includes a rust-preventing mechanism 171. Hereinafter, the rust-preventing mechanism 171 will be described. Note that the same constituents as those in the first embodiment described above are given the same reference numerals.

The rust-preventing mechanism 171 includes a wiper 172, a support member 173, a wiper-specific hydraulic cylinder 174, and an oil pan 175.

Rust preventive oil is supplied to the wiper 172 via the wiper-specific hydraulic cylinder 174. Accordingly, the wiper 172 is covered with the rust-preventive oil. The rust preventive oil may be the above-described hydraulic oil or an oil selected in accordance with a material of the piston rod 143. Note that, in the case of supplying the hydraulic oil to the wiper 172, the hydraulic oil tank 149 may be shared or a tank other than the hydraulic oil tank 149 may be provided. In the case where a rust-preventive oil different from the hydraulic oil is supplied to the wiper 172, a tank other than the hydraulic oil tank 149 is provided.

The support member 173 is configured to support the wiper 172 at one end thereof, and the other end of the support member 173 is accommodated in the wiper-specific hydraulic cylinder 174. The support member 173 is disposed so as to be freely movable forward and backward with respect to the wiper-specific hydraulic cylinder 174 under the control of the control unit 154.

The oil pan 175 is configured to hold the hydraulic oil leaking from the wiper 172 or the like.

The control unit 154 moves the support member 173 to put the wiper 172 into reciprocating motion between an end, on the hydraulic cylinder 142 side, of the piston rod 143 and the tension sensor 144. By the reciprocating motion of the wiper 172, the hydraulic oil or a rust-preventive oil is applied to the surface of the piston rod 143. The control unit 154 may put the wiper 172 into the reciprocating motion at predetermined intervals or may put the wiper 172 into the reciprocating motion under the direction of the person in charge of management.

In the above-described fourth modification, in the same manner as in the first embodiment, the piston rod 143 is controlled using the hydraulic pump 146, whereby the tension of the overhead wire 10 connected to the piston rod 143 is adjusted. According to the fourth modification, by using a hydraulic tension-adjustment mechanism such as the hydraulic pump 146, the rate of change in tension can be reduced without increasing the number of members (for example, coil springs), and thus, the rate of change in tension can be reduced while an increase in the size of the balancer can be substantially prevented.

Furthermore, according to the fourth modification, using the rust-preventing mechanism 171, the piston rod 143 is kept covered with the hydraulic oil or the rust preventive oil, so that the formation of rust in the piston rod 143 can be substantially prevented. In particular, since the balancer is used outdoors and exposed to the open air, periodic rust preventive treatment is effective. The piston rod 143 sometimes moves, over one year, from a position with the minimum amount of travel to a position with the maximum amount of travel, for example, and accordingly the piston rod 143 is exposed to the open air for a long period, and therefore, the periodic rust preventive treatment is preferably performed.

Note that, in the fourth modification, an example of hydraulically moving the wiper 172 was described, but, the wiper 172 may be moved by driving a rack and pinion with a motor.

(Second Embodiment)

Next, a second embodiment will be described with reference to FIG. 10. FIG. 10 is a diagram illustrating an exemplary aspect of balancers in use according to the second embodiment of the present invention. In the above-described first embodiment, an example in which one end of the overhead wire 10 is fixed to the support pole 30, and the balancer 14 is provided at the other end of the overhead wire 10 was described, however, in the second embodiment, balancers are respectively provided at both ends of the overhead wire 10. Note that the same constituents as those in the first embodiment described above are given the same reference numerals.

In the second embodiment, one end of the overhead wire 10 is connected to the support pole 30 via a balancer 14D and the other end of the overhead wire 10 is connected to the support pole 30 via a balancer 14E. The tension of the overhead wire 10 is adjusted by the two balancers 14D and 14E. The balancers 14D and 14E are provided in the same overhead wire 10 targeted for tension adjustment and function as a pair of balancers.

Each of the balancers 14D and 14E includes the same constituents as those of the above-described balancer 14. Specifically, each of the balancers 14D and 14E includes the casing 141, the hydraulic cylinder 142, the piston rod 143, the tension sensor 144, the rod 145, the hydraulic pump 146, the hydraulic hose 147, the motor 148, the hydraulic oil tank 149, and the drive control unit 150.

The control unit 154 of each of the balancers 14D and 14E is configured to control the piston rod 143, based on a calculated tension. In this case, the timing for controlling the piston rod 143 of the balancer 14D and the timing for controlling the piston rod 143 of the balancer 14E may be different or synchronized. When synchronously performed, the control of the piston rods 143 may be performed at the same time or at different times from each other.

The drive control unit 150 of each of the balancers may change a set tension, based on a position of the piston rod 143 and a result of detection by the tension sensor 144. For example, the drive control unit 150 changes the set tension by exercising control based on Hooke's law that the expansion of a spring is in proportional to a load equal to or lower than an elastic limit. In the case of a spring balancer, as a trolley wire is shorter, the force for pulling the balancer is greater accordingly, and therefore, by increasing the amount of travel of the balancer, the tension is controlled to be appropriate. In the second embodiment, the balancers do not include a spring member (for example, a coil spring), and therefore, for example, even when the tension is controlled to an appropriate value, the amount of travel of one of the balancers is sometimes larger than the amount of travel of the other unless the amounts of travel of the piston rods 143 of both the balancers are controlled to the same level. As described above, by exercising the control based on Hooke's law, in other words, by exercising the control that converts a change in tension associated with a change in the expansion of the trolley wire 12 into an appropriate amount of travel, the tension between the two balancers can be adjusted to be balanced without causing the balancers to communicate with each other for information, and furthermore, the positions (the amount of travel) of the piston rods 143 of the paired balancers (in this case, the balancers 14D and 14E) in the hydraulic cylinders 142 can be controlled to be relatively at the same level. Thus, even when the balancers cannot communicate with each other due to the occurrence of an unexpected accident, or even when the balancers are originally designed to be incapable of communicating with each other, the amounts of travel can be controlled to be at the same level. Note that the example of the above-described hydraulic type in which the position of the piston rod is used as information for the control of the actuator was described above, but, if a constituent other than the hydraulic type, such as an actuator using a chain or an actuator using a ball screw is adopted, for example, the rotational position of a motor can be used as information for control.

In the above-described second embodiment, in the same manner as in the first embodiment, the piston rod 143 is controlled using the hydraulic pump 146, whereby the tension of the overhead wire 10 connected to the piston rod 143 is adjusted. According to the second embodiment, by using a hydraulic tension adjustment mechanism such as the hydraulic pump 146, the rate of change in tension can be reduced without increasing the number of members (for example, coil springs), and thus, the rate of change in tension can be reduced while an increase in the size of the balancer can be substantially prevented.

Furthermore, according to the second embodiment, the balancers (the balancers 14D and 14E) are provided at both ends of the overhead wire 10, respectively, to adjust the tension at both ends of the overhead wire 10, so that a larger range of tension adjustment (the total amount of travel of the piston rods 143) can be secured.

Note that, in the second embodiment, the balancers 14A to 14C according to the first and second modifications of the first embodiment may be used.

(First Modification of Second Embodiment)

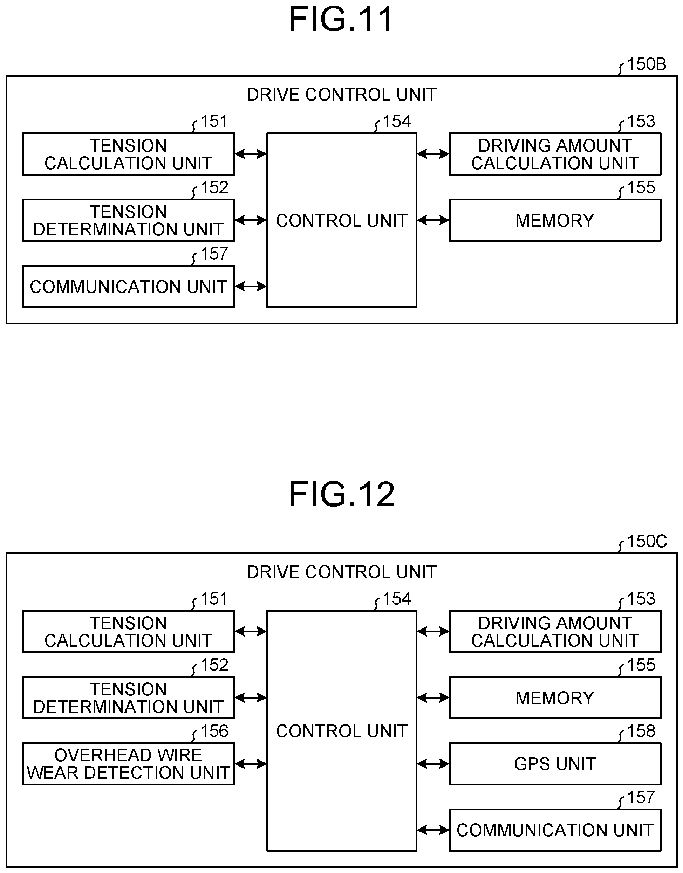

Next, a first modification of the above-described second embodiment will be described with reference to FIG. 11. FIG. 11 is a block diagram illustrating the configuration of a drive control unit in a balancer according to the first modification of the second embodiment. In the first modification, the above-described balancers 14D and 14E each include a drive control unit 150B, instead of the drive control unit 150. Hereinafter, the drive control unit 150B will be described. Note that the same constituents as those in the first and second embodiments described above are given the same reference numerals.

The drive control unit 150B includes the tension calculation unit 151, the tension determination unit 152, the driving amount calculation unit 153, the control unit 154, the memory 155, and a communication unit 157.

The communication unit 157 of a balancer is configured to transmit and receive a control signal to and from another balancer paired with the balancer. For example, the communication unit 157 of the balancer 14D is configured to transmit and receive a control signal to and from the communication unit 157 of the balancer 14E paired with the balancer 14D. The communication unit 157 may transmit and receive a signal by using the overhead wire 10 as a transmission path, or may transmit and receive a signal through wireless communications.

The balancers 14D and 14E according to the first modification are configured to control the movement of the piston rods 143 in cooperation with each other. For example, one of the balancers is set as a primary balancer and the other is set as a secondary balancer, and the primary balancer controls over the balancer paired with the primary balancer. Here, when the balancer 14D is the primary balancer and the balancer 14E is the secondary balancer, the control unit 154 of the balancer 14D causes the tension calculation unit 151 and the tension determination unit 152 of the balancer 14E to perform tension determination. In this case, when tension is determined to be appropriate, the control unit 154 does not perform tension adjustment. In contrast, when tension is determined to be inappropriate, the control unit 154 of the balancer 14E causes the tension calculation unit 151 and the tension determination unit 152 of the balancer 14E to perform tension determination, whereby the tension of balancer 14E, a result of the tension determination, and information on the position of the piston rod 143 are acquired. The driving amount calculation unit 153 of the balancer 14D sets the direction and amount of travel of the piston rod 143 of each of the balancers, based on the tension of each of the balancers, the determination result, and the position of the piston rod 143. The control unit 154 of the balancer 14D controls the piston rod 143 of the balancer 14D and transmits information on the control of the piston rod 143 to the balancer 14E via the communication unit 157. In this case, the piston rods 143 of the balancers 14D and 14E may be separately or synchronously moved.

In the above-described first modification, in the same manner as in the second embodiment, the piston rod 143 is controlled using the hydraulic pump 146, whereby the tension of the overhead wire 10 connected to the piston rod 143 is adjusted. According to the first modification, by using a hydraulic tension-adjustment mechanism such as the hydraulic pump 146, the rate of change in tension can be reduced without increasing the number of members (for example, coil springs), and thus the rate of change in tension can be reduced while an increase in the size of the balancer can be substantially prevented.

Furthermore, according to the first modification, the balancers communicate with each other via the communication units 157 to control the piston rods 143 in accordance with tension, whereby a load on a single balancer can be reduced.

Note that, in the first modification, as long as the primary balancer (in this case, the balancer 14D) includes the driving amount calculation unit 153, the other balancer (in this case, the balancer 14E) may be configured not to include the driving amount calculation unit 153. In this case, the drive control unit of the balancer 14E includes the tension calculation unit 151, the tension determination unit 152, the control unit 154, the memory 155, and the communication unit 157. Furthermore, in the case where the tension determination unit 152 of the balancer 14D is configured to determine whether the tension of the balancer 14E is appropriate based on tension acquired from the balancer 14E, the balancer 14E may be configured not to include the tension determination unit 152. In this case, the drive control unit of the balancer 14E includes the tension calculation unit 151, the control unit 154, the memory 155, and the communication unit 157.

(Second Modification of Second Embodiment)

Next, a second modification of the above-described second embodiment will be described with reference to FIG. 12. FIG. 12 is a block diagram illustrating the configuration of a drive control unit in a balancer according to the second modification of the second embodiment of the present invention. In the second modification, the above-described balancers 14D and 14E each include a drive control unit 150C, instead of the drive control unit 150. Hereinafter, the drive control unit 150C will be described. Note that the same constituents as those in the first and second embodiments described above are given the same reference numerals.

The drive control unit 150C includes the tension calculation unit 151, the tension determination unit 152, the driving amount calculation unit 153, the control unit 154, the memory 155, the overhead wire wear detection unit 156, the communication unit 157, and a global positioning system (GPS) unit 158. Note that, in the second modification, at least the balancer 14D includes a generator configured to generate vibration for wear detection. As the vibration generator, an actuator may be used.

The GPS unit 158 includes a receiver configured to receive radio waves from a GPS satellite. The GPS unit 158 is configured to acquire information on time, based on the received radio waves, and output the acquired information on time to the control unit 154. Note that, not only the GPS, but another type of a global navigation satellite system (GNSS) can be used.

The GPS unit 158 acquires information on time at predetermined intervals or at set times. The control unit 154 re-sets the times, based on the acquired information on time. By means of time setting based on the GPS, the control units 154 of the balancers can synchronize the times between the balancers.

In the second modification, by detecting the speed of signal transmission between the balancers 14D and 14E, the wear of the trolley wire 12 is detected. In the second modification, when the balancer 14D is a primary balancer and the balancer 14E is a secondary balancer, the control unit 154 of the balancer 14D generates vibration for overhead wire wear detection and transmits the vibration to the balancer 14E via the overhead wire 10 (the catenary wire 11 or the trolley wire 12) to initiate overhead wire wear detection.

The overhead wire wear detection unit 156 of the balancer 14D generates a vibration for wear detection for the balancer 14E. The vibration generated at this time is beneficially recognized by the balancer 14E, as a vibration for detecting the wear of the overhead wire 10.

When receiving the vibration for wear detection, the balancer 14E transmits a signal including the time of receipt of the vibration to the balancer 14D.

When acquiring the time of reception of the vibration from the balancer 14E, the overhead wire wear detection unit 156 of the balancer 14D calculates the difference between the time of reception of the vibration and the time when the overhead wire wear detection unit 156 generates the vibration. This difference corresponds to a transmission time taken to transmit the vibration through the overhead wire 10 between the balancer 14D and the balancer 14E. The overhead wire wear detection unit 156 of the balancer 14D compares the calculated transmission time with a threshold value to detect the wear of the overhead wire 10. The threshold value mentioned herein is a value corresponding to the time of transmission through the unworn overhead wire 10 (the trolley wire 12), for example, a predetermined value or the time of transmission calculated immediately after the replacement of the overhead wire 10. When the calculated transmission time is shorter than the threshold value, the overhead wire wear detection unit 156 of the balancer 14D determines that the overhead wire 10 is worn. The overhead wire wear detection unit 156 of the balancer 14D outputs the determination result to the control unit 154.

When acquiring the determination result from the overhead wire wear detection unit 156, the control unit 154 stores the determination result in the memory 155 or transmits the determination result to a center configured to centrally control a plurality of the balancers. When transmitting the determination result to the center, the control unit 154 transmits information (for example, ID) for identifying the balancer 14D and the overhead wire 10 targeted for tension adjustment, together with the determination result.

In the above-described second modification, in the same manner as in the second embodiment, the piston rod 143 is controlled using the hydraulic pump 146, whereby the tension of the overhead wire 10 connected to the piston rod 143 is adjusted. According to the second modification, by using a hydraulic tension-adjustment mechanism such as the hydraulic pump 146, the rate of change in tension can be reduced without increasing the number of members (for example, coil springs), and thus the rate of change in tension can be reduced while an increase in the size of the balancer can be substantially prevented.

Furthermore, according to the second modification, the overhead wire wear detection unit 156 detects the wear of the overhead wire 10, based on the speed of transmission of vibration between the balancers 14D and 14E, whereby a person in charge of management can know the timing for the replacement of the overhead wire 10, for example.

Note that, in the second modification, as long as the primary balancer (in this case, the balancer 14D) includes the overhead wire wear detection unit 156, the secondary balancer (in this case, the balancer 14E) may be configured not to include an overhead wire expansion detector. In this case, the drive control unit of the balancer 14E includes the tension calculation unit 151, the tension determination unit 152, the driving amount calculation unit 153, the control unit 154, the memory 155, the communication unit 157, and the GPS unit 158.

In the second modification, as long as the difference in time generated between the balancers 14D and 14E does not have an effect on the detection of expansion of the overhead wire 10, the drive control unit may be configured not to include the GPS unit 158.

In the second modification, an example in which the wear of the overhead wire 10 is detected by measuring the transmission speed (transmission time) of vibration was described, but a signal for wear detection is not limited to vibration. For example, the expansion of the overhead wire 10 may be detected by measuring the propagation velocity of a sound wave. In this case, one balancer includes a generator configured to generate a sound, and another balancer includes a receiver configured to receive the sound generated by the generator.

In the second modification, an example in which one of the two balancers is the primary balancer while the other is the secondary balancer, and the driving of the balancers is controlled by the primary balancer was described. However, a controller configured to control the two balancers may be provided to control the two balancers. In this case, the drive control unit of each of the balancers includes, at least, the control unit 154, the memory 155, and the communication unit 157. The controller acquires a value detected by the tension sensor from each of the balancers, determines whether the tension is appropriate calculates the driving amount of each of the piston rods 143, and transmits the driving amount to each of the balancers. Thus, the controller controls each of the balancers by performing a part of the above-described balancer functions.

Thus, the present invention may include various embodiments not described herein, and various design changes are allowed without departing from technical concepts specified by the scope of the claims. In the above-described embodiments, the examples in which the tension of a train wire is adjusted was described. In addition, the above-described balancers can be adopted for other targets for the adjustment of tension of a wire.

Industrial Applicability

As described above, the balancer and the balancer system according to the present invention are suitable for reducing the rate of change in tension while substantially preventing an increase in size. Reference Signs List

| 10 | overhead wire |
|---|---|
| 11 | catenary wire |
| 12 | trolley wire |
| 13 | hanger |
| 14, 14A to 14E | balancer |
| 20 | train |
| 21 | pantograph |
| 30 | support pole |
| 141 | casing |
| 142 | hydraulic cylinder |
| 143 | piston rod |
| 144 | tension sensor |
| 145 | rod |
| 146 | hydraulic pump |
| 147 | hydraulic hose |
| 148 | motor |
| 149 | hydraulic oil tank |
| 150, 150A to 150C | drive control unit |
| 151 | tension calculation unit |
| 152 | tension determination unit |
| 153 | driving amount calculation unit |
| 154 | control unit |
| 155 | memory |
| 156 | overhead wire wear detection unit |
| 157 | communication unit |
| 158 | GPS unit |
| 161, 171 | rust-preventing mechanism |
| 200 | laser distance sensor |
| 201 | reflecting plate |

**EP 4 131 690 A1**

**Claims**

1. A balancer, comprising:

   an actuator configured to adjust a tension of a wire member;
   a tension sensor disposed between the wire member and the actuator and configured to detect the tension of the wire member; and
   a drive control unit configured to control the actuator, based on the tension of the wire member detected by the tension sensor.

2. The balancer according to claim 1, wherein
   the actuator includes:

   a hydraulic cylinder,
   a hydraulic pump configured to supply a hydraulic oil to the hydraulic cylinder, and
   a piston rod disposed to be freely movable forward and backward with respect to the hydraulic cylinder and configured to move by the hydraulic oil supplied to the hydraulic cylinder.

3. The balancer according to claim 2, wherein
   the drive control unit is configured to detect expansion of the wire member, based on a position of the piston rod after the wire member is adjusted to have a set tension.

4. The balancer according to claim 1, wherein
   the drive control unit is configured to detect wear of the wire member, based on a transmission time of a signal transmitted via the wire member to another balancer paired with the balancer.

5. The balancer according to any one of claims 1 to 3, wherein
   the drive control unit is configured to

   acquire information on a tension of another balancer paired with the balancer, and
   calculate a driving amount of the actuator of the balancer including the drive control unit and an actuator of the other balancer.

6. The balancer according to claim 2, further comprising:
   a rust-preventing mechanism configured to prevent the piston rod from rusting.

7. The balancer according to claim 6, wherein
   the rust-preventing mechanism is configured to hermetically seal the piston rod in an inert gas atmosphere.

8. The balancer according to claim 6, wherein
   the rust-preventing mechanism is configured to apply a rust preventive oil to the piston rod.

9. The balancer according to any one of claims 1 to 8, wherein

   the wire member includes a trolley wire configured to come into contact with a pantograph of a train, and
   the drive control unit is configured to

   cause the tension sensor to detect the tension of the wire member at a predetermined time before a time when the train passes through the trolley wire targeted for control, and
   control the actuator, based on the detected tension.

10. A balancer system comprising:

    a first balancer connected to one end of a wire member and configured to adjust a tension of the wire member, and
    a second balancer connected to another end of the same wire member shared with the first balancer, and configured to adjust the tension of the wire member, wherein
    the first balancer includes:

a first actuator configured to adjust the tension of the wire member;

a first tension sensor disposed between the wire member and the first actuator and configured to detect the tension of the wire member;

a first drive control unit configured to control the first actuator, based on the tension of the wire member detected by the first tension sensor; and

a first communication unit to communicate with the second balancer, and

the first balancer includes:

a second actuator configured to adjust the tension of the wire member;

a second tension sensor disposed between the wire member and the second actuator and configured to detect the tension of the wire member;

a second drive control unit configured to control the second actuator, based on the tension of the wire member detected by the second tension sensor; and

a second communication unit configured to communicate with the first balancer.

11. The balancer system according to claim 10, wherein
the first drive control unit is configured to detect wear of the wire member, based on a transmission time of a signal transmitted to the second balancer via the wire member.

12. The balancer system according to claim 10 or 11, wherein
the first drive control unit is configured to

acquire information on a tension of the second balancer, and
calculate a driving amount of the actuators of the first balancer and the second balancer.

13. The balancer system according to any one of claims 10 to 12, wherein

the first actuator includes:

a first hydraulic cylinder;
a first hydraulic pump configured to supply a first hydraulic oil to the first hydraulic cylinder; and
a first piston rod disposed to be freely movable forward and backward with respect to the first hydraulic cylinder, and configured to move by the first hydraulic oil supplied to the first hydraulic cylinder, and

the second actuator includes:

a second hydraulic cylinder;
a second hydraulic pump configured to supply a second hydraulic oil to the second hydraulic cylinder; and
a second piston rod disposed to be freely movable forward and backward with respect to the second hydraulic cylinder, and configured to move by the second hydraulic oil supplied to the second hydraulic cylinder.

14. The balancer system according to any one of claims 10 to 13, wherein

the first drive control unit is configured to change a set tension, based on information on control of the first actuator and a result detected by the first tension sensor, and
the second drive control unit is configured to change a set tension, based on information on control of the second actuator and a result detected by the second tension sensor.

# FIG.1

# FIG.2

# FIG.3

┌──────────────────────────────────────────────────────────────────┐ 150
│                        DRIVE CONTROL UNIT                          │
│  ┌─────────────────┐151      ┌──────────────┐154   ┌─────────────────┐153  │
│  │    TENSION      │◄───────►│              │◄────►│ DRIVING AMOUNT  │  │
│  │ CALCULATION UNIT│         │              │      │CALCULATION UNIT │  │
│  └─────────────────┘         │ CONTROL UNIT │      └─────────────────┘  │
│  ┌─────────────────┐152      │              │      ┌─────────────────┐155  │
│  │    TENSION      │◄───────►│              │◄────►│     MEMORY      │  │
│  │DETERMINATION UNIT│        └──────────────┘      └─────────────────┘  │
│  └─────────────────┘                                                  │
└──────────────────────────────────────────────────────────────────┘

# FIG.4

┌──────────────────────────────────────────────────────────────────┐ 150A
│                        DRIVE CONTROL UNIT                          │
│  ┌─────────────────┐151      ┌──────────────┐154   ┌─────────────────┐153  │
│  │    TENSION      │◄───────►│              │◄────►│ DRIVING AMOUNT  │  │
│  │ CALCULATION UNIT│         │              │      │CALCULATION UNIT │  │
│  └─────────────────┘         │              │      └─────────────────┘  │
│  ┌─────────────────┐152      │              │      ┌─────────────────┐155  │
│  │    TENSION      │◄───────►│ CONTROL UNIT │◄────►│     MEMORY      │  │
│  │DETERMINATION UNIT│        │              │      └─────────────────┘  │
│  └─────────────────┘         │              │                         │
│  ┌─────────────────┐156      │              │                         │
│  │ OVERHEAD WIRE   │◄───────►│              │                         │
│  │WEAR DETECTION UNIT│       └──────────────┘                         │
│  └─────────────────┘                                                  │
└──────────────────────────────────────────────────────────────────┘

# FIG.5

# FIG.6

# FIG.7

# FIG.8

# FIG.9

# FIG.10

# FIG.11

DRIVE CONTROL UNIT 150B

| 151 TENSION CALCULATION UNIT | ↔ | | ↔ | 153 DRIVING AMOUNT CALCULATION UNIT |
| 152 TENSION DETERMINATION UNIT | ↔ | 154 CONTROL UNIT | ↔ | 155 MEMORY |
| 157 COMMUNICATION UNIT | ↔ | | | |

# FIG.12

DRIVE CONTROL UNIT 150C

| 151 TENSION CALCULATION UNIT | ↔ | | ↔ | 153 DRIVING AMOUNT CALCULATION UNIT |
| 152 TENSION DETERMINATION UNIT | ↔ | 154 CONTROL UNIT | ↔ | 155 MEMORY |
| 156 OVERHEAD WIRE WEAR DETECTION UNIT | ↔ | | ↔ | 158 GPS UNIT |
| | | | ↔ | 157 COMMUNICATION UNIT |

| INTERNATIONAL SEARCH REPORT | International application No. |
|---|---|
| | PCT/JP2021/009666 |

**A. CLASSIFICATION OF SUBJECT MATTER**
Int.Cl. H02G7/02(2006.01)i, B60M1/26(2006.01)i
FI: B60M1/26L, H02G7/02

According to International Patent Classification (IPC) or to both national classification and IPC

**B. FIELDS SEARCHED**

Minimum documentation searched (classification system followed by classification symbols)
Int.Cl. H02G7/02, B60M1/26

Documentation searched other than minimum documentation to the extent that such documents are included in the fields searched
Published examined utility model applications of Japan    1922-1996
Published unexamined utility model applications of Japan    1971-2021
Registered utility model specifications of Japan    1996-2021
Published registered utility model applications of Japan    1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 9-328025 A (NAGANO KEIKI CO., LTD.) 22 December 1997 (1997-12-22), paragraphs [0009]-[0026], fig. 1-4 | 1-3<br>5<br>9 |
| Y | JP 7-156699 A (EAST JAPAN RAILWAY COMPANY) 20 June 1995 (1995-06-20), paragraphs [0004], [0005], fig. 1, 2 | 5 |

☐ Further documents are listed in the continuation of Box C.     ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 25 May 2021 | 01 June 2021 |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.

PCT/JP2021/009666

| Box No. II | Observations where certain claims were found unsearchable (Continuation of item 2 of first sheet) |
|---|---|

This international search report has not been established in respect of certain claims under Article 17 (2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

| Box No. III | Observations where unity of invention is lacking (Continuation of item 3 of first sheet) |
|---|---|

This International Searching Authority found multiple inventions in this international application, as follows:
(Invention 1) 1-3, 5, and 9
(Invention 2) 4
(Invention 3) 6-8
(Invention 4) 10-14

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☒ No required additional search fees were timely paid by the applicant.   Consequently, this international search report is restricted to the invention first mentioned in the claims; it is covered by claims Nos.:
(Invention 1) Claims 1-3, 5, 9

**Remark on Protest** ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (January 2015)

**INTERNATIONAL SEARCH REPORT**

International application No.

PCT/JP2021/009666

**Box No. III**     **Observations where unity of invention is lacking (Continuation of item 3 of first sheet)**

This International Searching Authority found multiple inventions in this international application, as follows:

(Invention 1) Claims 1-3, 5, and 9

Document 1 indicates the following:

A balancer (tension adjustment device 10) provided with: an actuator (hydraulic device 20) that adjusts the tension of a wire material (overhead wire 90); a tension sensor (pressure sensor 50) provided between the wire material and the actuator to detect the tension of the wire material; and a drive control unit (control device 60) that controls the actuator on the basis of the tension of the wire material as detected by the tension sensor. In light of document 1, claims 1-3 lack novelty and do not involve an inventive step, and thus do not have a special technical feature. However, claim 5 that depends from claim 1 has the special technical feature wherein "the drive control unit acquires information on the tension of another balancer that forms a set, and calculates the amount of drive of each of the actuators of the host balancer having the drive control unit and of said other balancer". Claim 9 has the same technical feature as claim 5. Accordingly claims 1-3, 5, and 9 are classified as invention 1.

(Invention 2) Claim 4

Claim 4 cannot be said to have the same or corresponding technical features between this claim and claim 5 classified as invention 1.

In addition, although claim 4 depends from claim 1 classified as invention 1, the added technical feature relative to claim 1 of wear detection for a wire material has a low technical relevance to the technical feature of claim 1 of "actuator control". Thus, it is not considered that claim 4 has a link of invention to claim 1. Furthermore, claim 4 is not substantially identical to or similarly closely related to any of the claims classified as invention 1.

Accordingly claim 4 cannot be identified as invention 1.

Meanwhile, claim 4 has the special technical feature wherein "the drive control unit detects wear of the wire material on the basis of a period of time of transmission of a signal transmitted to the other balancer that forms the set "; thus this claim is classified as invention 2.

(Invention 3) Claims 6-8

Claims 6-8 cannot be said to have the same or corresponding technical features between these claims, and claim 5 classified as invention 1 or claim 4 classified as invention 2.

In addition, although claims 6-8 depend from claim 1 classified as invention 1, the added technical feature relative to claim 1 of a rust prevention mechanism has a low technical relevance to the technical feature of claim 1 of "actuator control". Thus, it is not considered that claims 6-8 have a link of invention to claim 1. Furthermore, claims 6-8 are not substantially identical to or similarly closely related to any of the claims classified as invention 1 or 2.

Accordingly claims 6-8 cannot be identified as invention 1 or 2.

Meanwhile, claims 6-8 have the special technical feature of "a rust prevention mechanism for preventing the piston rod from rusting"; thus these claims are classified as invention 3.

(Invention 4) Claims 10-14

Claims 10-14 cannot be said to have the same or corresponding technical features between these claims, and claim 1 classified as invention 1, claim 4 classified as invention 2, or claims 6-8 classified as invention 3.

In addition, claims 10-14 are not substantially identical to or similarly closely related to any of the claims classified as inventions 1 to 3.

Accordingly claims 10-14 cannot be identified as any of inventions 1 to 3.

Meanwhile, claims 10-14 have the special technical feature of "providing

Form PCT/ISA/210 (continuation of first sheet) (January 2015)

| INTERNATIONAL SEARCH REPORT | International application No. |
|---|---|
| | PCT/JP2021/009666 |

**Box No. III     Observations where unity of invention is lacking (Continuation of item 3 of first sheet)**

This International Searching Authority found multiple inventions in this international application, as follows:

a first balancer connected to one end of a wire material to adjust the tension of the wire material; and a second balancer connected to another end of the same wire material as the first balancer to adjust the tension of the wire material, the first balancer having: a first actuator that adjusts the tension of the wire material; a first tension sensor provided between the wire material and the first actuator to detect the tension of the wire material; a first drive control unit that controls the first actuator on the basis of the tension of the wire material as detected by the first tension sensor; and a first communication unit that communicates with the second balancer, the first balancer having: a second actuator that adjusts the tension of the wire material; a second tension sensor provided between the wire material and the second actuator to detect the tension of the wire material; a second drive control unit that controls the second actuator on the basis of the tension of the wire material as detected by the second tension sensor; and a second communication unit that communicates with the first balancer"; thus these claims are classified as invention 4.

Form PCT/ISA/210 (continuation of first sheet) (January 2015)

**INTERNATIONAL SEARCH REPORT**
Information on patent family members

| International application No. |
| --- |
| PCT/JP2021/009666 |

| JP 9-328025 A | 22 December 1997 | (Family: none) |
| JP 7-156699 A | 20 June 1995 | (Family: none) |

Form PCT/ISA/210 (patent family annex) (January 2015)

**EP 4 131 690 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3666971 B